(19) Europäisches Patentamt
European Patent Office
Office européen des brevets

(11) Veröffentlichungsnummer: **0 285 864 B1**

(12) **EUROPÄISCHE PATENTSCHRIFT**

(45) Veröffentlichungstag der Patentschrift: **22.04.92**

(51) Int. Cl.5: **G01M 3/20**

(21) Anmeldenummer: **88104075.2**

(22) Anmeldetag: **15.03.88**

Teilanmeldung 89120855.5 eingereicht am 15/03/88.

(54) **Verfahren und Vorrichtung zur Leckprüfung an mit Flüssigkeiten gefüllten Systemen.**

(30) Priorität: **31.03.87 EP 87104737**

(43) Veröffentlichungstag der Anmeldung:
**12.10.88 Patentblatt 88/41**

(45) Bekanntmachung des Hinweises auf die Patenterteilung:
**22.04.92 Patentblatt 92/17**

(84) Benannte Vertragsstaaten:
**CH DE FR GB IT LI**

(56) Entgegenhaltungen:
**EP-A- 0 047 324**
**EP-A- 0 184 521**
**DE-A- 2 926 112**
**DE-U- 1 903 765**
**FR-A- 2 347 668**

**TECHNISCHES MESSEN, Band 49, Nr. 5, Mai 1982, Seiten 193-199, München; R. LARSON: "Gegenwärtiger Stand der Entwicklung bei Heliummassenspektrometer-Lecksuchern"**

(73) Patentinhaber: **LEYBOLD AKTIENGESELL-SCHAFT**
**Bonner Strasse 498**
**W-5000 Köln 51(DE)**

(72) Erfinder: **Voss, Günter, Dr.**
**Werschbergstrasse 60**
**W-5203 Much(DE)**

(74) Vertreter: **Leineweber, Jürgen, Dipl.-Phys.**
**Nagelschmiedshütte 8**
**W-5000 Köln 40(DE)**

EP 0 285 864 B1

**Beschreibung**

Die Erfindung bezieht sich auf ein Verfahren zur Leckprüfung an Flüssigkeiten enthaltenden Systemen, bei dem auf Lecks zu prüfende Wandungsbereiche von einer Seite her mit Testgas beaufschlagt werden und bei dem gegebenenfalls durch ein Leck hindurchtretendes Testgas auf der anderen Seite, auf der sich Flüssigkeit befindet, mit Hilfe eines Testgasdetektors nachgewiesen wird. Außerdem bezieht sich die Erfindung auf eine für die Durchführung dieses Verfahrens geeignete Vorrichtung.

An geschlossenen Systemen, die während des Betriebs mit Dampf und/oder mit einer Flüssigkeit gefüllt sind, wird nach bisheriger Praxis eine Leckmessung lediglich vor dem Befüllen oder nach Entfernen der Flüssigkeit durchgeführt. Zu solchen Systemen gehören zum Beispiel Kühlkreisläufe, Transportleitungen, Pumpsysteme, Wärmetauscher, Flüssigkeitsbehälter, Dampfturbinen und viele mehr.

Aus der EP-A1-184 521 ist ein Verfahren der eingangs erwähnten Art bekannt. Bei diesem Verfahren wird der Seite des Systems, auf die Testgas im Falle eines Lecks gelangt (Sekundärseite), Flüssigkeit entnommen, gekühlt, entspannt und entgast. Das im Entgaser gewonnene Gas wird einem Testgasdetektor zugeführt. Insgesamt sind die offenbarten Mittel zur Feststellung von Testgas auf der Sekundärseite aufwendig, da mehrere Ventile, Kühlvorrichtungen und Entgasungsvorrichtungen erforderlich sind. Außerdem ist es nachteilig, wenn bei einer kontinuierlichen Überwachung der Sekundärseite kontinuierlich Flüssigkeit entzogen werden muß, so daß Weiter- oder Zurückführungseinrichtungen für diesen kontinuierlich fließenden Strom unentbehrlich sind.

Aus der DE-OS 32 30 146 ist es darüberhinaus bekannt, geschlossene Rohrleitungsysteme dadurch auf Dichtigkeit zu prüfen, daß in das an sich dicht geschlossene System ein Druckmedium eingepreßt wird, daß der Druck über eine längere Zeitdauer hinweg aufrechterhalten wird und daß dabei mittels eines Meßinstrumentes der Druck überwacht wird. Wenn kein Druckabfall stattfindet, bedeutet dies, daß die geprüfte Anlage dicht ist. Eine Lecksuche dieser Art ist relativ grob. Außerdem sind die in dieser Weise zu überwachenden Anlagen so auszulegen, daß sie einem relativ hohen Prüfdruck standhalten. Schließlich ist eine kontinuierliche Leckuüberwachung des in Betrieb befindlichen Rohrleitungssystems, was eine ständige Aufrechterhaltung des Prüfdruckes erfordern würde, in der Regel nicht möglich.

Der vorliegenden Erfindung liegt die Aufgabe zugrunde, ein Verfahren und eine Vorrichtung der eingangs genannten Art so zu gestalten, daß eine hochempfindliche, auch kontinuierlich durchführbare Lecksuche beziehungsweise Lecküberwachung möglich ist.

Erfindungsgemäß wird diese Aufgabe durch die Patentansprüche 1 und 4 gelöst. Weitere Ausgestaltungen sind in den abhängigen Patentansprüchen erfaßt.

Bei dem erfindungsgemäßen Verfahren werden die auf Lecks zu prüfenden Bereiche des Flüssigkeitssystems von außen mit Helium beaufschlagt. Ist ein Leck vorhanden, dann tritt Helium durch das Leck in die Flüssigkeit ein und wird gelöst. Mit Hilfe eines an sich bekannten Lecksuchers, der über eine heliumdurchlässige Membran an das Flüssigkeitssystem angeschlossen ist, läßt sich das durch die Membran hindurchdiffundierende Helium nachweisen. Die Beaufschlagung des interessierenden Bereichs des Flüssigkeitssystems mit Testgas kann durch Besprühen erfolgen. Eine andere Möglichkeit besteht darin, den interessierenden Bereich des Flüssigkeitssystems in einem abgeschlossenen Raum, zum Beispiel einer Kammer, anzuordnen, welche Helium mit einer ausreichenden Konzentration enthält.

Weitere Vorteile und Einzelheiten der Erfindung sollen anhand von in den Figuren 1 bis 8 schematisch dargestellten Ausführungsbeispielen erläutert werden. Es zeigen:

Figuren 1 und 2 jeweils ein Rohrsystem, bei dem an das Rohrsystem ein Testgasreservoir angeschlossen ist und der Austritt des Testgases aus einem eventuell vorhandenen Leck registriert wird,

Figuren 3 und 4 jeweils ein Rohrsystem, bei dem ein Testgasdetektor an das Leitungssystem angeschlossen ist und der Eintritt des Testgases in ein eventuell vorhandenes Leck registriert wird,

Figur 5 ein Ausführungsbeispiel für einen Membranseparator,

Figur 6 eine Gefriertrocknungsanlage, bei der von der Erfindung Gebrauch gemacht wird,

Figur 7 einen Wärmetauscher, bei dem von der Erfindung Gebrauch gemacht wird und

Figur 8 eine Dampfturbine.

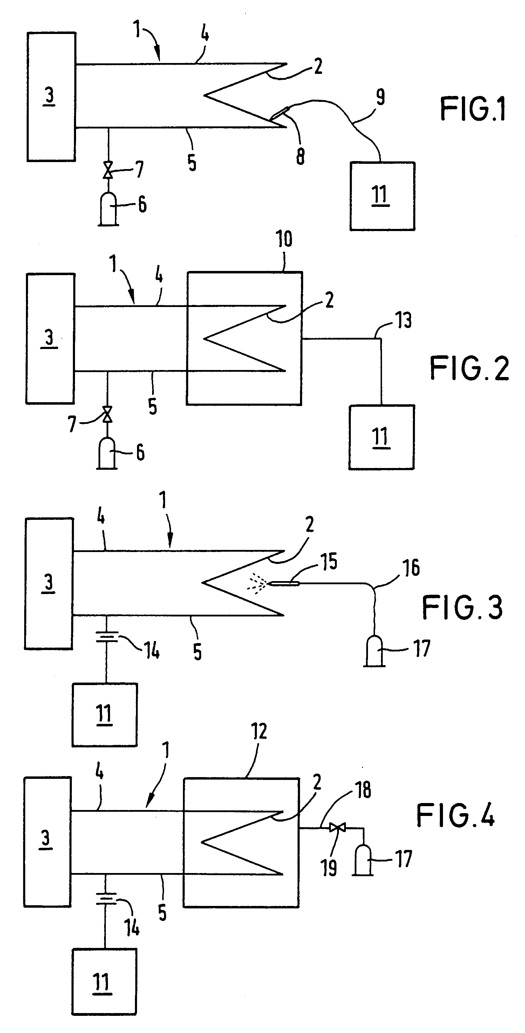

Das in den Figuren 1 bis 4 schematisch dargestellte, eine Flüssigkeit im Kreislauf führende Rohrsystem 1 umfaßt eine Rohrschlange 2, eine Versorgungseinrichtung 3 (zum Beispiel eine Kältemaschine bei einem Kühlkreislauf) und die Verbindungsleitungen 4 und 5.

Bei den Ausführungen nach den Figuren 1 und 2 ist an eine der Verbindungsleitungen 4, 5 ein Testgasreservoir (Druckgasflasche 6) über das Ventil 7 angeschlossen. Bei geöffnetem Ventil 7 geht Testgas, vorzugsweise Helium, in die Flüssigkeit des Rohrsystems 1 in Lösung. Weist das Leitungssystem 1 ein Leck auf, dann tritt Helium aus, selbst wenn das Leck so klein ist, daß wegen der Oberflächenspannung die Flüssigkeit selbst nicht austritt. Die Feststellung des Lecks kann in der Weise erfolgen, daß die leckverdächtigen Bereiche mit Hilfe eines Schnüfflers 8 abgesucht werden (Fig. 1). Der Schnüffler 8 steht über die Leitung 9 mit einem testgasspezifischen Detektor 11 in Verbindung. Bei Helium als Testgas ist dieser Detektor zweckmäßigerweise als Massenspektrometer ausgebildet. Der Testgasdetektor 11 ist lediglich als Block dargestellt worden. Zweckmäßigerweise ist er Bestandteil eines Lecksuchgerätes, das weitere Versorgungseinrichtungen (Vakuumpumpe, Kühlfalle, Ventile und dergleichen) enthält.

Das Ausführungsbeispiel nach Fig. 2 unterscheidet sich vom Ausführungsbeispiel nach Fig. 1 dadurch, daß ein interessierender Bereich des Rohrleitungssystems 1, in diesem Fall Rohrschlange 2, innerhalb eines abgeschlossenen Raumes, Kammer 10, angeordnet ist. An diese Kammer 10 ist der testgasspezifische Detektor 11 beziehungsweise das Lecksuchgerät über die Leitung 13 angeschlossen. Bei einem in dieser Weise ausgestatteten Rohrleitungssystem ist eine kontinuierliche Überwachung der Rohrschlange 2 auf Lecks möglich.

Das Ventil 7, über das die Druckgasflasche 6 an das Rohrsystem 1 angeschlossen ist, ist zweckmäßigerweise als Druckminderventil ausgebildet. Zum einen ergibt sich dadurch die Möglichkeit, daß das Rohrsystem 1 nicht mit dem vollen Druck der Flasche 6 beaufschlagt werden muß; zum anderen besteht die Möglichkeit, mit Hilfe entsprechender Druckmeßgeräte das Vorhandensein von Testgas im Reservoir 6 zu überwachen. Im übrigen ist es nicht erforderlich, daß bei einer Dauerüberwachung das Ventil 7 ständig offengehalten werden muß. Wesentlich ist, daß eine ausreichende Menge Testgas in der Flüssigkeit des Rohrsystems gelöst ist. Solange das Rohrsystem dicht ist, verbleibt das gelöste Testgas in der Flüssigkeit.

Bei den Ausführungsbeispielen nach den Figuren 3 und 4 ist der testgasspezifische Detektor beziehungsweise das Lecksuchgerät 11 über einen Membranseparator 14 an das Rohrsystem 1 angeschlossen. Anders als bei den Ausführungsbeispielen nach den Figuren 1 und 2 wird nicht der Austritt von Testgas durch ein gegebenenfalls vorhandenes Leck, sondern der Eintritt von Testgas durch das Leck in die Flüssigkeit beobachtet. Dazu werden die auf Lecks zu untersuchenden Bereiche des Rohrleitungssystems 1 mit Testgas umspült. Beim Ausführungsbeispiel nach Figur 3 geschieht das mit Hilfe der Sprühdüse 15, die über die Leitung 16 mit einem Testgasreservoir 17 verbunden ist. Beim Ausführungsbeispiel nach Fig. 4 ist der interessierende Bereich, hier die Rohrschlange 2, innerhalb eines abgeschlossenen Raumes, Kammer 12, angeordnet. Über die Leitung 18 mit dem Ventil 19 wird Testgas in die Kammer 12 eingelassen.

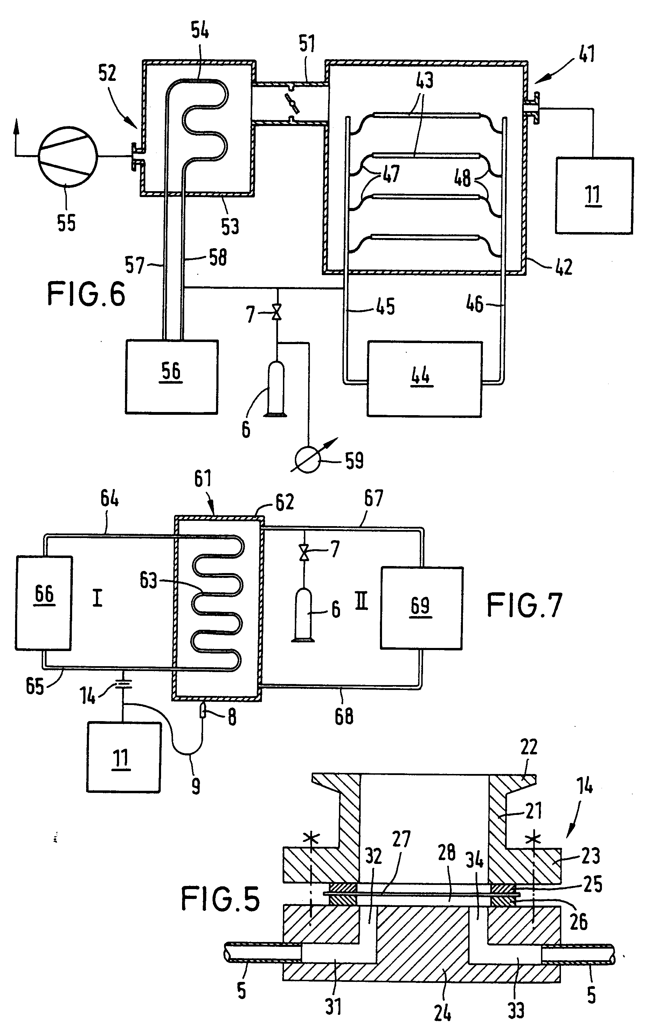

Fig. 5 zeigt ein Ausführungsbeispiel für einen Membranseparator 14, über den der testgasspezifische Detektor 11 an das Rohrsystem 1 angeschlossen ist. Er besteht aus einem Leitungsabschnitt 21, der stirnseitig mit Flanschen 22 und 23 ausgerüstet ist. An den Flansch 22 wird der testgasspezifische Detektor 11 angeschlossen.

Mit 24 ist ein Leitungselement bezeichnet, das zum Beispiel in die Leitung 5 des Rohrsystems eingeschaltet ist. Auf einer Stirnseite dieses Leitungselementes 24 ist der Leitungsabschnitt 21 mit seinem Flansch 23 aufgeschraubt. Zwischen dem Flansch 23 und dem Leitungselement 24 sind zwei Ringe 25 und 26 angeordnet, die vorzugsweise aus Kupfer bestehen und zwischen sich eine Membran 27 einspannen. Dadurch entsteht zwischen der Stirnseite des Elementes 24 und der Membran 27 ein Raum 28. Die in dem Leitungselement 24 endenden Abschnitte der Rohrleitung 5 setzen sich in Bohrungen 31, 32 beziehungsweise 33, 34 fort, welche jeweils in den Raum 28 münden. Dadurch wird die durch die Leitung 5 strömende Flüssigkeit durch den Raum 28 etwa parallel zur Membran 27 geführt.

Die Membran 27 ist für das gewählte Testgas durchlässig, für die in der Rohrleitung 5 strömende Flüssigkeit jedoch praktisch nicht. Bei Helium als Testgas wird zweckmäßigerweise eine etwa 1/10 mm starke Folie aus F.E.P.-Tetrafluorkohlenstoff als Membran gewählt. Gegebenenfalls in der durch die Rohrleitung 5 strömenden Flüssigkeit gelöstes Helium kann durch die Membran 27 hindurchtreten und wird vom angeschlossenen Testgasdetektor oder Lecksucher registriert, ohne daß dieses Gerät durch die Flüssigkeit gefährdet ist.

Fig. 6 zeigt eine Einrichtung zur Gefriertrocknung, bei der die Erfindung angewendet wird. Die Gefriertrocknungseinrichtung 41 besteht aus der Kammer 42 mit den Stellplatten 43 für Behälter mit dem zu lyophilisierenden Produkt. Die Stellplatten 43 von Gefriertrocknungseinrichtungen dieser Art sind üblicherweise heizbar, da dem zu lyophilisierenden Produkt zur Beschleunigung des Vorganges Wärme zugeführt werden muß. Häufig sind die Stellplatten 43 auch noch kühlbar, so daß das vor der Gefriertrocknung notwendige Einfrieren ebenfalls innerhalb der Kammer 42 vorgenommen werden kann.

Die Temperierung der Stellplatten 43, die selbst doppelwandig ausgebildet sind, erfolgt mit Hilfe der Wärme-/Kälteversorgungseinrichtung 44. Von dieser Versorgungseinrichtung 44 aus führen zwei Leitungen 45 und 46 in die Gefriertrocknungskammer 42 hinein. Die Stellplatten 43 selbst sind parallel zueinander über flexible Leitungen 47 und 48 an die Leitungen 45 und 46 angeschlossen, so daß die dem Wärmetransport dienende Flüssigkeit (ein Silikonöl oder eine Sole) das aus Stellplatten 43, Versorgungseinrichtung 44 und Leitungen 45, 46 bestehende Rohrleitungssystem im Kreislauf durchströmt.

An die Gefriertrocknungskammer 42 ist über die Rohrleitung 51 eine Evakuierungseinrichtung 52 angeschlossen. Diese umfaßt das in der Kammer 53 befindliche, gekühlte Rohrschlangensystem 54 sowie die an die Kammer 53 angeschlossene Vakuumpumpe 55. Zur Versorgung der Rohrschlange 54 in der Kondensatorkammer 53 dient die Kältemaschine 56, die über die Leitungen 57 und 58 mit der Rohrschlange 54 verbunden ist.

Gefriertrocknungsverfahren werden bevorzugt bei der Herstellung von Arzneimitteln eingesetzt. Der Wert einer Charge ist häufig sehr hoch. Von besonderer Bedeutung ist deshalb der Schutz der Charge vor Kontaminationen, die unter anderem durch Lecks in dem Leitungssystem für das Heiz- und/oder Kühlmedium verursacht werden können. Um eine ständige Dichtheitskontrolle insbesondere derjenigen Bereiche des Flüssigkeitssystems zu ermöglichen, von denen aus bei einem Leck Kontaminationen ausgehen könnten, sind folgende Maßnahmen getroffen: Die Leitungen 45 und 58 sind - wie bei den Ausführungsbeispielen nach den Figuren 1 und 2 - über das Ventil 7 an ein Testgas-Reservoir 6, vorzugsweise einem unter Druck stehenden, Helium enthaltenden Behälter angeschlossen. Zur Kontrolle des Vorrates an Testgas ist noch das Druckmeßinstrument 59 vorgesehen. Dieser Anschluß des Testgasreservoirs ermöglicht es, daß sich Helium in den in den Leitungssystemen befindlichen Flüssigkeiten löst. An die Gefriertrocknungskammer 42 ist weiterhin der testgasempfindliche Detektor 11 angeschlossen. Tritt in den kritischen Bereichen der Leitungssysteme, das heißt innerhalb der Kammer 12 beziehungsweise innerhalb des Kondensators 53, ein Leck auf, dann tritt Helium aus und gelangt in den testgasspezifischen Detektor 11.

Es besteht auch die Möglichkeit, den Testgasdetektor über einen Membranseparator 14 an die Leitungssysteme des Gefriertrockners und des Kondensators anzuschließen. Voraussetzung ist dann, daß der Gefriertrocknungsprozeß unter Testgasatmosphäre durchgeführt wird.

In Fig. 7 ist als weiteres Beispiel ein Wärmetauscher 61 schematisch dargestellt. Dieser umfaßt das Gehäuse 62, in dem die Rohrschlange 63 angeordnet ist. Die Rohrschlange 63 ist über aus dem Gehäuse 62 herausgeführte Leitungen 64 und 65 mit einer Versorgungseinrichtung 66 verbunden und bildet beispielsweise einen Primärkreislauf I. Der Sekundärkreislauf II wird gebildet von dem Inneren des Gehäuses 62 sowie den Leitungen 67 und 68, die zu einem Verbraucher 69 führen.

Um kontrollieren zu können, ob der Wärmetauscher 61 gerade in den Bereichen dicht ist, in denen die Medien des Primärkreislaufs I und des Sekundärkreislaufs II in enger Nachbarschaft geführt sind, ist einer der beiden Kreisläufe, beim dargestellten Ausführungsbeispiel der Sekundärkreislauf II, über das Ventil 7 an das Testgasreservoir 6 angeschlossen. Dadurch löst sich Testgas in der Flüssigkeit des Sekundärkreislaufs. Ist die Rohrschlange 63 undicht, dann gelangt Testgas, vorzugsweise Helium, in den Primärkreislauf I. An den Primärkreislauf I ist wieder über den Membranseparator 14 der testgasspezifische Detektor beziehungsweise Lecksucher 11 angeschlossen. Für den Fall, daß Helium registriert wird, ist die Rohrschlange 63 leck.

Beim dargestellten Ausführungsbeispiel besteht außerdem noch die Möglichkeit, das Wärmetauschergehäuse 62 von außen nach Lecks abzusuchen. Das geschieht mit Hilfe des Schnüfflers 8, der über die Leitung 9 ebenfalls am Lecksucher 11 angeschlossen ist. Durch ein gegebenenfalls im Gehäuse 62 vorhandenes Leck tritt Helium aus und kann mit Hilfe des Schnüfflers 8 registriert werden.

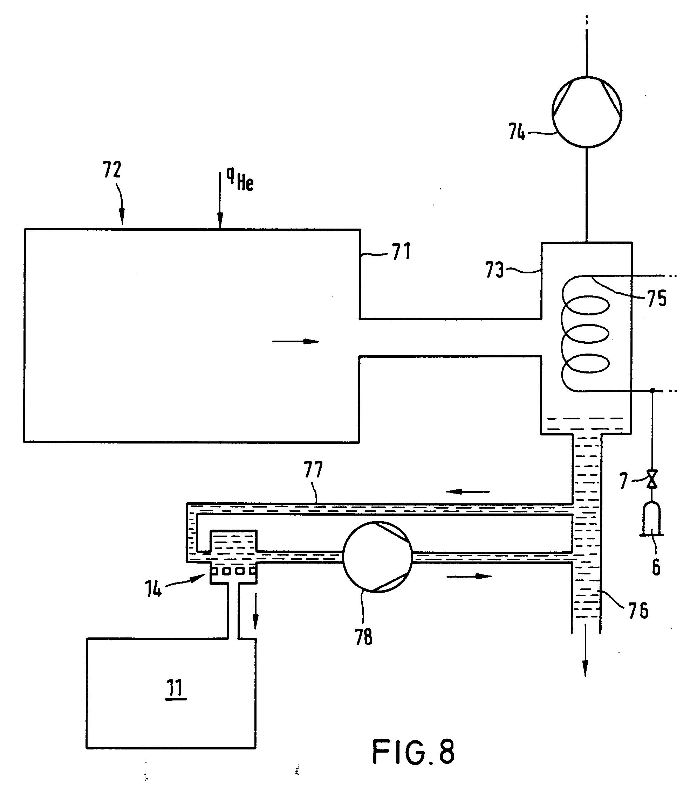

In Figur 8 ist schematisch das Gehäuse 71 einer Dampfturbine 72 dargestellt. An das Gehäuse 71 schließt sich der Kondensator 73 an, an den die Vakuumpumpe 74 angeschlossen ist. Im Kondensator 73 befindet sich die Kühlschlange 75, an der der Dampf kondensiert. Das Kondensat wird über die Leitung 76 abgeführt.

Um das Gehäuse 71 der Dampfturbine während des Betriebes auf Lecks zu untersuchen, wird es an leckverdächtigen Stellen mit Helium besprüht. Ist ein Leck vorhanden, dringt die Heliummenge $9_{He}$ in den Dampf der Turbine ein. Das Testgas gelangt mit dem Dampf in den Kondensator 73. Dort kommt es mit dem Kondensat in Berührung und löst sich darin. Für den Fall eines Lecks ist also das Kondensat heliumhaltig und kann darin nachgewiesen werden.

Da die Kondensatmengen relativ groß sind, ist es zweckmäßig, für den Membranseparator 14 einen Bypass 77 mit der Förderpumpe 78 vorzusehen. Mit dem Detektor 11 erfolgt der Nachweis des Heliums im Kondensat.

Bei dem in Figur 8 dargestellten Ausführungsbeispiel einer Dampfturbine besteht zusätzlich die Möglichkeit, die Kondensatorschlange 75 während des Betriebs auf Lecks zu untersuchen bzw. zu überwachen, wenn an den Schlangenkreislauf das Testgasreservoir 6 über das Ventil 7 angeschlossen ist. Im Kühlmedium des Kühlkreislaufes enthaltenes Testgas, vorzugsweise Helium, würde im Falle eines Lecks in der Kühlschlange 75 in das Kondensat gelangen und mit Hilfe des Membranseparators 14 und des Detektors 11 nachgewiesen werden können.

Der wesentliche Vorteil der Erfindung liegt darin, daß eine empfindliche Heliumlecksuche, falls gewünscht, on-line, an gefüllten Flüssigkeitssystemen durchführbar ist. Geht man davon aus, daß die in der Flüssigkeit gelöste Heliummenge groß ist gegen den Durchsatz von Helium durch den Membranseparator 14, dann kann die gelöste Helium-Konzentration in einem Fast-Gleichgewicht bestimmt werden. Wesentlich ist, daß die Membran 27 ständig überströmt ist, damit keine Testgasbeziehungsweise Heliumverarmung auftritt. Aus den physikalischen Eigenschaften der Flüssigkeit (Löslichkeit, Temperatur und dergleichen) sowie der Membran 27 läßt sich die Größe von Lecks errechnen.

Je nachdem, nach welchem Verfahren die Lecküberwachung durchgeführt wird, kann eine Empfindlichkeit erreicht werden die bei $10^{-9}$ mbar l/s liegt. Entscheidend ist dabei die Konzentration, mit der Helium in der jeweiligen Flüssigkeit vorliegt. Die größte Empfindlichkeit kann mit dem Verfahren erzielt werden, bei dem an das Flüssigkeitssystem ein Heliumreservoir angeschlossen ist, so daß Helium in dieser Flüssigkeit bis zur Sättigung gelöst ist, Durch Lecks der angegebenen Größenordnung können Flüssigkeiten in der Regel noch nicht austreten, so daß Lecks in Flüssigkeitssystemen erkannt werden können, bevor die Flüssigkeit selbst austritt.

Die Möglichkeit, während des normalen Betriebs von Dampf- oder Flüssigkeitssystemen eine Dauerlecksuche zu betreiben, spart Wartungszeit, erhöht die Verfügbarkeit der Systeme und kann im Störfall Zeit und Kosten sparen. Einige Leckagen (zum Beispiel Kaltlecks, Lecks unter Druckbedingungen) sind in "trockenem" Zustand der Apparatur nach konventionellen Methoden häufig nicht erkennbar. Durch die erfindungsgemäßen Verfahren werden derartige Lecks jetzt sogar während des Betriebs feststellbar.

**Patentansprüche**

1. Verfahren zur Leckprüfung an Flüssigkeiten enthaltenden Systemen (1; 43, 47, 48; 54; 61; 72), bei dem auf Lecks zu prüfende Wandungsbereiche von einer Seite her mit Testgas beaufschlagt werden und bei dem gegebenenfalls durch ein Leck hindurchtretendes Testgas auf der anderen Seite, auf der sich Flüssigkeit befindet, mit Hilfe eines Testgasdetektors (11) nachgewiesen wird, dadurch gekennzeichnet, daß die Flüssigkeit, in die gegebenenfalls durch ein Leck hindurchtretende Testgas eindringt, durch einen Membrangasseparator (14) hindurchgeführt wird, in dem das eventuell vorhandene Testgas abgetrennt und mit Hilfe des Testgasdetektors (11) nachgewiesen wird.

2. Verfahren nach Anspruch 1, dadurch gekennzeichnet, daß sich auf beiden Seiten der auf Lecks zu prüfenden Wandungsbereiche Flüssigkeiten befinden.

3. Verfahren nach Anspruch 1 oder 2, dadurch gekennzeichnet, daß in der Flüssigkeit gelöstes Testgas, vorzugsweise Helium, verwendet wird.

4. Vorrichtung zur Durchführung eines Verfahrens zur Leckprüfung an Flüssigkeiten enthaltenden Systemen (1; 43, 47, 48; 54; 61; 72), bei welcher die auf Lecks zu untersuchenden, von einer Seite mit Testgas beaufschlagten Wandungen auf der anderen Seite von einer Flüssigkeit durchströmt sind und bei welcher der von der Flüssigkeit durchströmten Seite ein Testgasdetektor (11) zugeordnet ist, dadurch gekennzeichnet, daß an die von der Flüssigkeit durchströmten Seite ein Membrangasseparator (14) angeschlossen ist, der einen von der Flüssigkeit durchströmten Raum (28) mit einem Wandungsbereich aufweist, der von einer testgasdurchlässigen, flüssigkeitsdichten Membran (27) gebildet wird, und daß der Einlaß des Testgasdetektors (11) über einen Leitungsabschnitt (21) durch die Membran (27) hindurchdringendes Testgas aufnimmt.

5. Vorrichtung nach Anspruch 4, dadurch gekennzeichnet, daß sich auf beiden Seiten der auf Lecks zu prüfenden Wandungsbereiche Flüssigkeiten befinden und daß das Testgas in den Flüssigkeiten gelöstes Helium ist.

6. Vorrichtung nach Anspruch 4 oder 5, dadurch gekennzeichnet, daß sie als Wärmetauscher (61) mit Gehäuse (62), Primärkreislauf I und Sekundärkreislauf II ausgebildet ist und daß an dem einen der beiden Kreisläufe I oder II ein Testgas-Reservoir (6) und an den anderen der Membrangasseparator (14) angeschlossen ist.

7. Vorrichtung nach Anspruch 4 oder 5, dadurch gekennzeichnet, daß sie als Dampfturbine (72) mit Gehäuse (71), Kondensator (73) und Kondensatabflußleitung (76) ausgebildet ist und daß der Membrangasseparator (14) an die Kondensatabflußleitung (76) angeschlossen ist.

8. Vorrichtung nach Anspruch 7, dadurch gekennzeichnet, daß der Membrangasseparator (14) in einem Bypass (77) untergebracht ist.

9. Vorrichtung nach Anspruch 7 oder 8, dadurch gekennzeichnet, daß an den Kühlkreislauf der Kühlschlange (75) ein Testgasreservoir (6) angeschlossen ist.

10. Vorrichtung nach einem der Ansprüche 6 bis 9, dadurch gekennzeichnet, daß das Testgasreservoir (6) über ein Druckminderventil (7) angeschlossen ist.

## Claims

1. A method of testing for leaks in systems (1; 43, 47, 48; 54; 61; 72) containing liquids, wherein wall zones, to be tested for leaks, are supplied from one side with test gas and wherein test gas possibly passing through a leak is detected on the other side, on which the liquid is present, with the aid of a test gas detector (11), characterised in that the liquid into which test gas, possibly passing through a leak, penetrates is conducted through a membrane gas separator (14) in which the possibly present test gas is separated and is detected with the aid of the test gas detector (11).

2. A method as claimed in Claim 1, characterised in that liquids are present on both sides of the wall zones to be tested for leaks.

3. A method as claimed in Claim 1 or 2, characterised in that test gas, preferably helium, dissolved in the liquid is used.

4. A device for the implementation of a method of testing for leaks in systems (1; 43, 47, 48; 54; 61; 72) containing liquids, wherein the walls which are to be investigated for leaks and which are supplied from one side with test gas are traversed on the other side by a liquid, and wherein the side traversed by the liquid is assigned a test gas detector (11), characterised in that a membrane gas separator (14) is connected to the side traversed by the liquid, which membrane gas separator (14) comprises a space (28) which is traversed by the liquid and which possesses a wall zone which is formed by a test-gas-permeable, fluid-tight membrane (27), and that the inlet of the test gas detector (11) receives test gas penetrating through the membrane (27) via a line section (21).

5. A device as claimed in Claim 4, characterised in that liquids are present on both sides of the wall zones to be tested for leaks and the test gas is helium dissolved in the liquids.

6. A device as claimed in Claim 4 or 5, characterised in that said device has the form of a heat exchanger (61) with a housing (62), a primary circuit I and a secondary circuit II, and that a test gas reservoir (6) is connected to one of the two circuits I or II and the membrane gas separator (14) is connected to the other thereof.

7. A device as claimed in Claim 4 or 5, characterised in that said device has the form of a steam turbine (72) with a housing (71), a condenser (73) and a condensate discharge line (76), and that the membrane gas separator (14) is connected to the condensate discharge line (76).

8. A device as claimed in Claim 7, characterised in that the membrane separator (14) is accommodated in a bypass (77).

9. A device as claimed in Claim 7 or 8, characterised in that a test gas reservoir (6) is connected to the cooling circuit of the cooling coil (75).

10. A device as claimed in one of Claims 6 to 9, characterised in that the test gas reservoir (6) is connected via a pressure reducing valve (7).

## Revendications

1. Procédé pour contrôler des systèmes (1; 43, 47, 48; 54; 61; 72) contenant des liquides sur la présence de fuites, selon lequel on applique un gaz traceur à un côté d'aires de parois à contrôler sur la présence de fuites et selon lequel on décèle le gaz traceur, passant éventuellement par une fuite, de l'autre côté, où se trouve du liquide, à l'aide d'un détecteur de gaz traceur (11), caractérisé en ce que l'on fait passer le liquide, dans lequel pénètre éventuellement du gaz traceur passant par une fuite, à travers un séparateur de gaz à membrane (14) dans lequel est séparé le gaz traceur éventuellement présent, que l'on décèle à l'aide du détecteur de gaz traceur (11).

2. Procédé selon la revendication 1, caractérisé en ce que des liquides se trouvent des deux côtés des aires de parois à contrôler sur la présence de fuites.

3. Procédé selon la revendication 1 ou 2, caractérisé en ce que l'on utilise un gaz traceur dissous dans le liquide, de préférence de l'hélium.

4. Dispositif pour la mise en oeuvre d'un procédé pour contrôler des systèmes (1; 43, 47, 48; 54; 61; 72) contenant des liquides sur la présence de fuites, avec lequel les parois à contrôler sur la présence de fuites, à un côté desquelles est appliqué un gaz traceur, sont balayées de l'autre côté par un liquide, et qui comprend un détecteur de gaz traceur (11) coordonné au côté balayé par le liquide, caractérisé en ce qu'un séparateur de gaz à membrane (14) est raccordé au côté balayé par le liquide, séparateur qui présente un espace (28) parcouru par le liquide et pourvu d'une aire de paroi formée par une membrane (27) perméable au gaz traceur et étanche au liquide, et que l'entrée du détecteur de gaz traceur (11) reçoit, à travers un segment de conduite (21), le gaz traceur traversant la membrane (27).

5. Dispositif selon la revendication 4, caractérisé en ce que des liquides se trouvent des deux côtés des aires de parois à contrôler sur la présence de fuites et que le gaz traceur est de l'hélium dissous dans les liquides.

6. Dispositif selon la revendication 4 ou 5, caractérisé en ce qu'il est réalisé sous la forme d'un échangeur de chaleur (61) comportant une enveloppe (62), un circuit primaire I et un circuit secondaire II, et qu'un réservoir de gaz traceur (6) est raccordé à l'un des deux circuits, I ou II, et le séparateur de gaz à membrane (14) est raccordé à l'autre circuit.

7. Dispositif selon la revendication 4 ou 5, caractérisé en ce qu'il est réalisé sous la forme d'une turbine à gaz (72) comportant un carter (71), un condenseur (73) et une conduite d'évacuation de condensat (76), et que le séparateur de gaz à membrane (14) est raccordé à la conduite d'évacuation de condensat (76).

8. Dispositif selon la revendication 7, caractérisé en ce que le séparateur de gaz à membrane (14) est installé dans une dérivation (77).

9. Dispositif selon la revendication 7 ou 8, caractérisé en ce qu'un réservoir de gaz traceur (6) est raccordé au circuit de refroidissement du serpentin de refroidissement (75).

10. Dispositif selon une des revendications 6 à 9, caractérisé en ce que le réservoir de gaz traceur (6) est raccordé à travers un robinet détendeur (7).

EP 0 285 864 B1

FIG.1

FIG.2

FIG.3

FIG.4

8

FIG.6

**54** **51** **41**
**52** **43**
**47** **48** **11**
**55** **53** **42**
**57** **58** **45** **46**
**56** **7** **44**
**6**
**59**

**61**
**64** **62** **67**
**66** I **63** **7** II **69** FIG.7
**6**
**65** **68**
**14** **8**
**11** **9**

**22**
**14**
**21**
**27** **23**
**32** **28** **34** **25**
**26**
FIG.5
**5** **31** **24** **33** **5**

FIG.8